Europäisches Patentamt

European Patent Office

Office européen des brevets

(11) Publication number: **0 370 968**
**A1**

(12) **EUROPEAN PATENT APPLICATION**

(21) Application number: 89830497.7

(51) Int. Cl.⁵: **B60T 15/04, F16K 39/02**

(22) Date of filing: **14.11.89**

(30) Priority: **22.11.88 IT 6804188**

(43) Date of publication of application:
**30.05.90 Bulletin 90/22**

(84) Designated Contracting States:
**AT BE DE ES FR GB IT NL SE**

(71) Applicant: **INDUSTRIE MAGNETI MARELLI S.r.l.**
**Via Adriano 81**
**I-20128 Milano(IT)**

(72) Inventor: **Izzo, Giuseppe**
**Via Timavo 124**
**I-20099 Sesto San Giovanni (Milano)(IT)**

(74) Representative: **Quinterno, Giuseppe et al**
**c/o Jacobacci-Casetta & Perani S.p.A. Via**
**Alfieri, 17**
**I-10121 Torino(IT)**

(54) **A valve, particularly a pneumatic valve, provided with a pre-inlet pilot valve.**

(57) The valve comprises:
a hollow body (2) in which a main valve seat (6) is defined between an inlet aperture (3) for the pressurised fluid and an outlet aperture (4),
- an annular main obturator (7) which cooperates with the seat (6) and in which an auxiliary seat (8) of reduced cross-section is formed,
- a pilot obturator (9) mounted for movement through the main obturator (7) and cooperating with the auxiliary seat (8) so as to put the regions upstream and downstream of the main obturator (7) into communication shortly before the disengagement of the main obturator (7) from the associated seat (6) in order to open the valve.

The main obturator (7) is axially sealingly slidable in an annular channel-like cavity (13) in a fixed guide structure (12) coaxial with the main seat (16). At least one narrow hole (25) is formed in the obturator (7) for putting the region downstream of the main obturator (7) into communication with the cavity (13) of the guide structure (12) so that, when the pilot obturator (9) leaves the associated seat (8), the pressures of the fluid acting on the surface of the main obturator (7) are substantially balanced.

FIG. 1

# A valve, particularly a pneumatic valve, provided with a pre-inlet pilot valve

The present invention relates to a valve, and particularly a pneumatic valve, comprising
a hollow body in which a main valve seat is defined between an inlet aperture for a pressurised fluid and an outlet aperture,
a main annular obturator which cooperates with the seat and in which an auxiliary seat of reduced cross-section is formed, and
a pilot obturator mounted for movement through the main obturator and cooperating with the auxiliary seat so as to put the regions upstream and downstream of the main obturator into communication shortly before the disengagement of the main obturator from the associated seat in order to open the valve.

Valves of the type defined above, which are currently known as pre-inlet valves or valves with a pilot obturator, are very sensitive, in that they open very promptly and in that this can be achieved by the application of a very small force.

This type of valve also has a very low hysteresis.

A further advantageous characteristic of pre-inlet valves lies in the fact that they have very low outlet-pressure losses during automatic pressure-regulation, for example, in the event of losses in the circuit connected to their outlet apertures.

A disadvantageous characteristic of a pre-inlet valve lies in the fact that, if its outlet pressure characteristics are monitored as a function of its stroke, there are found to be differences between the static characteristics and the dynamic characteristics of the final pressure attainable.

Valves are also known which have seats and obturators in which the difference between the final pressures which can be supplied under static and under dynamic conditions is practically zero. These are so-called balanced valves, that is, valves made in such a way that the pressures of the intercepted fluid acting on the obturator in the closed position are balanced.

Such balanced valves are not very sensitive, however, and have considerable hysteresis and large pressure losses during automatic regulation.

The object of the present invention is to provide a valve which has the advantageous characteristics of both pre-inlet valves and balanced valves, but not their disadvantages.

According to the invention, this object is achieved by means of a valve of the type defined at the beginning of the present description, whose principal characteristic lies in the fact that the main obturator is sealingly slidably mounted in a channel-like cavity in a fixed guide structure coaxial with the main seat, a narrow hole being formed in the obturator for putting the region downstream of the main obturator into communication with the channel-like cavity so that, when the pilot obturator leaves the associated seat, the pressures of the fluid acting on the surface of the main obturator are substantially balanced.

Further characteristics and advantages of the invention will become clear from the detailed description which follows with reference to the appended drawings, provided purely by way of non-limiting example, in which:

Figure 1 is an axial section of a valve according to the invention, and

Figures 2 to 5 are axial sections of four variants of the valve of Figure 1.

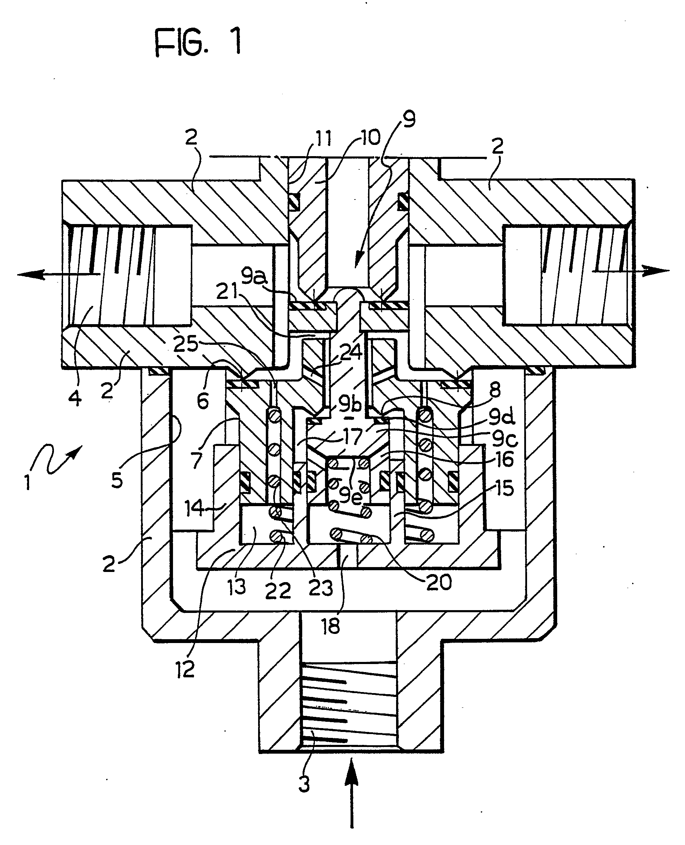

In Figure 1, a valve according to the present invention is generally indicated 1. This valve comprises a hollow body 2 with an inlet connector 3 for connection to a pressurised-fluid source, and two outlet connectors 4 for connection to a fluid user circuit, for example, a pneumatic braking system.

A chamber 5 is defined in the body 2 between the inlet connector 3 and the outlet connectors 4. An annular, main valve seat 6 is formed in the chamber in the body 2. A substantially annular main obturator, indicated 7, cooperates with the seat 6. An auxiliary valve seat 8 of considerably smaller cross-section than the main seat 6 is formed on the inner surface of the main obturator 7.

A pilot obturator mounted for axial movement through the main obturator 7 is indicated 9. The obturator 9 has a head 9a which extends above the main obturator 7 and has a larger diameter than the upper end portion of that obturator. A control piston, indicated 10, is sealingly slidable in an aperture 11 in the valve body and cooperates with the head 9a of the pilot obturator 9.

The pilot obturator 9 also includes a rod 9b which extends from the head 9a and has an enlarged-diameter extension 9c forming a shoulder 9d which cooperates with the auxiliary valve seat 8 in the manner of an obturator. The portion 9c of the pilot obturator has a lower axial recess 9e.

In the valve body 2, between the main valve seat 6 and the inlet connector 3, there is a fixed guide structure 12 which is fixed to the valve body 2 and is coaxial with the seat 6. An annular channel-like cavity 13 is formed in this guide structure 12, in which the portion of the main obturator 7 facing the inlet connector 3 is mounted sealingly for axial sliding. The cavity 13 is defined laterally by two coaxial annular walls, indicated 14 and 15. The lower end portion 9c of the pilot obturator 9 is sealingly slidable axially in the wall 15 of the structure 12.

A through-hole, indicated 16, is formed in the lower end portion 9c of the pilot obturator 9 so as to put the region inside the recess 9e into permanent communication with the annular region 17 between the obturators 7 and 9 and the upper end surface of the wall 15 of the structure 12.

The structure 12 has a central hole 18 through which the region inside the recess 9e of the pilot obturator communicates permanently with the inlet connector 3.

A helical spring, indicated 20, has one end acting on the end wall of the recess 9e of the pilot obturator 9 and its other end acting on the surface of the fixed structure 12 surrounding the hole 18. The spring 20 tends to keep the pilot obturator in the position shown in Figure 1, in which it lies against the auxiliary seat 8 with its head 9a separated from the top of the main obturator 7 by a space indicated 21.

A further helical spring, indicated 22, extends within the cavity 13 of the guide structure 12 and into a deep slot 23 formed in the main obturator 7 from the lower face thereof. The spring 22 tends to urge the main obturator 7 into the position shown in Figure 1, in which it lies against the valve seat 6.

Passages, indicated 24, are formed in the portion of the main obturator 7 downstream of the auxiliary seat 8.

A narrow through-hole, indicated 25, is formed in the main obturator 7 and puts the region downstream of that obturator into communication with the groove 23 of the obturator and hence with the cavity 13 of the guide structure 12.

In operation, when the valve described above is in the condition illustrated in Figure 1, the outlet connector 4 is disconnected from the inlet connector 3. In this situation, the main piston 7 is urged towards the valve seat 6 as a result of the action of the spring 22, the force exerted on it by the pilot obturator 9, and as a result of the force applied to it by the pressurised fluid present in the annular region 17.

When the control piston 10 is gradually lowered, before the head 9a of the pilot obturator is brought into engagement with the main obturator 7, the portion 9c of the pilot obturator leaves the auxiliary seat 8: a flow of pressurised fluid is propagated from the region 17 as far as the outlet connector 4. This fluid exerts a pressure on the surfaces of the main obturator 7 such as to apply to that obturator a downward force which can balance the forces which tend to urge the obturator upwards.

The further descent of the control piston 10 brings the head 9a of the pilot obturator 9 into engagement with the main obturator 7, which requires a very small force to move it away from its valve seat.

As soon as the main obturator has moved away from the valve seat 6, the pressurised fluid can flow towards the outlet connector 4, passing outside the guide structure 12 and through the space between the seat 6 and the obturator 7.

The pressure in the cavity 13 of the guide structure 12 is brought gradually to the same value as the outlet pressure, through the through-hole 25, and, when the control piston 10 is subsequently raised again, the thrust of the springs 20 and 22 is therefore sufficient to return the obturators 7 and 9 to the closed position.

The valve described above is in fact a valve with a pilot obturator (or a pre-inlet valve) and a balanced main obturator. It therefore has all the advantages of both pre-inlet valves and balanced valves at the same time.

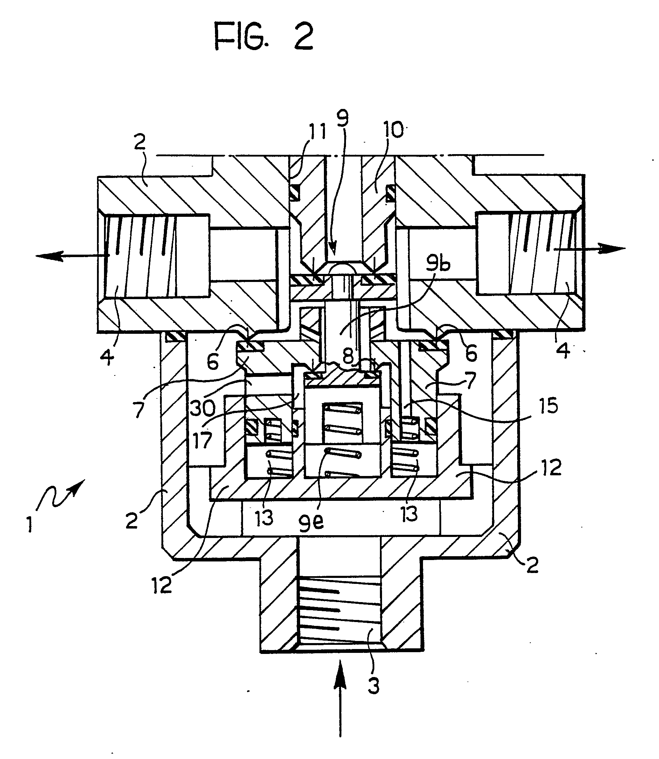

In Figure 2, which shows a variant of the valve shown in Figure 1, the parts and elements already described have again been given the same reference numerals.

The valve shown in Figure 2 differs from that of Figure 1 in the following respects:
- the guide structure 12 has no central aperture (the hole 18 of the version of Figure 1 is missing);
- at least one radial passage 30 is formed in the main obturator 7 and puts the annular chamber 17 into permanent communication with the inlet connector 3;
- the lower portion of the pilot obturator 9 has a diametral slot which extends beyond the end of the recess 9e almost up to its shoulder which cooperates with the auxiliary valve seat 8.

The operation of the valve shown in Figure 2 is exactly the same as that of the valve of Figure 1 and will therefore not be described further.

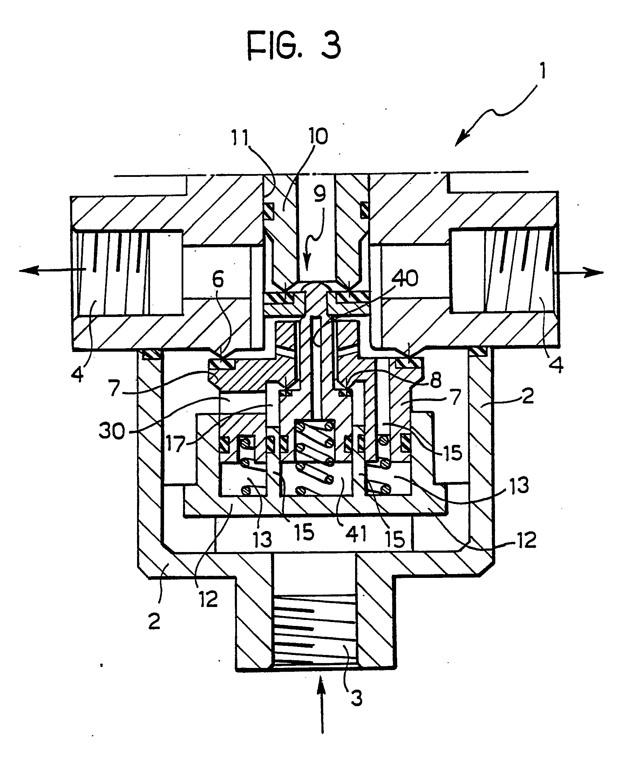

Figure 3 shows a further variant of the valve according to the invention. In this drawing, the parts and elements already described above have again been given the same reference numerals.

In the version of Figure 3, the guide structure 12 again has no central aperture and the annular region 17 communicates permanently with the inlet connector 3 through a radial passage 30 formed in the main actuator 7, as in the version of Figure 2. The pilot obturator 9 has a central axial passage 40 which puts the region 41 (defined between that obturator and the guide structure 12) into permanent communication with the region inside the control piston 10, which in turn communicates with the atmosphere. The auxiliary obturator 9, however, has no passages for communication between the region 41 and the annular region 17.

In the variant of Figure 3, only atmospheric pressure acts permanently on the lower surface of the pilot obturator 9. If the diameter of the region 41 is substantially equal to that of the auxiliary seat 8, the pilot obturator 9 is also balanced and therefore requires very little force to open it.

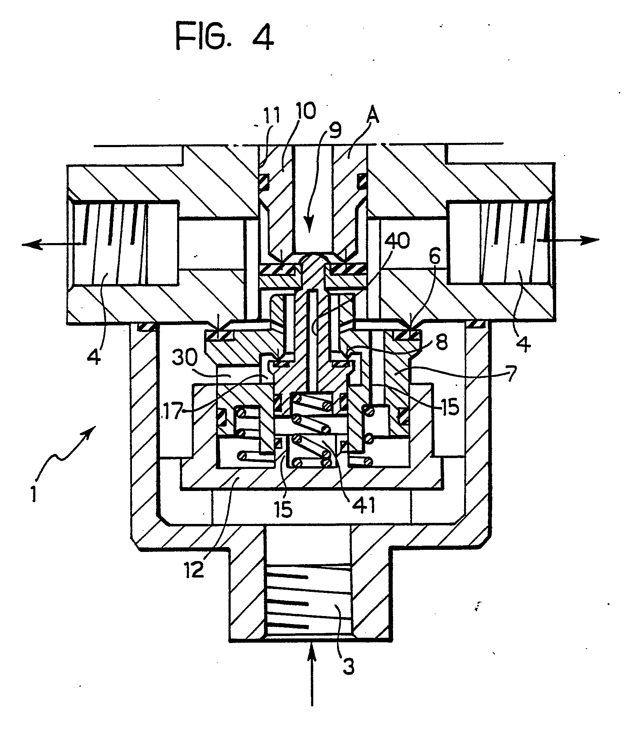

The valve according to Figure 4 is substantially equivalent to that of Figure 3 and differs therefrom only in that the lower portion of the pilot obturator is mounted sealingly for sliding in the internal portion of the main obturator 7, rather than in the wall 15 of the guide structure 12. Thus, in this case, the valve is one in which the pilot obturator is also balanced and hence requires very little force to open it.

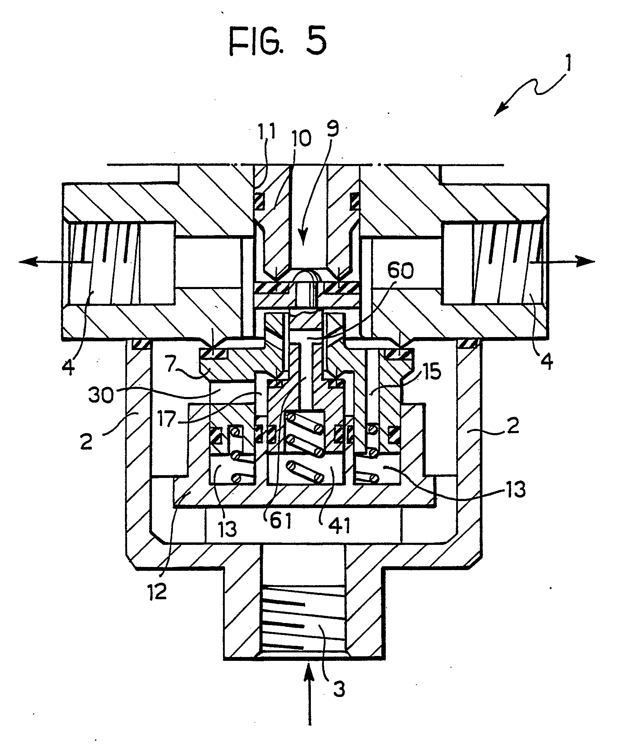

In the version according to Figure 5, the annular region 17 also communicates permanently with the inlet connector 3 through a radial hole 30 in the main obturator 7. Moreover, in the variant of Figure 5, the rod of the pilot obturator 9 has a diametral hole 60 which communicates with the region 41 through an axial passage 61. By virtue of the passages 60 and 61, the region 41 communicates permanently with the outlet connectors 4. The pressure in the chamber 41 therefore corresponds at all times to the pressure sent by the valve towards the user circuits.

## Claims

1. A valve, particularly a pneumatic valve, comprising:
a hollow body (2) in which a main valve seat (6) is defined between an inlet aperture (3) for a pressurised fluid and at least one outlet aperture (4),
an annular main obturator (7) which cooperates with the seat (6) and in which an auxiliary seat (8) of reduced cross-section is formed,
a pilot obturator (9) mounted for movement through the main obturator (7) and cooperating with the auxiliary seat (8) so as to put the regions upstream and downstream of the main obturator (7) into communication shortly before the disengagement of the main obturator (7) from the associated seat (6) in order to open the valve,
characterised in that the main obturator (7) is mounted sealingly for axial sliding in a channel-like cavity (13) in a fixed guide structure (12) coaxial with the main seat (6), at least one narrow hole (25) being formed in the main obturator (7) for putting the region downstream of the main obturator (7) into communication with the channel-like cavity (13) so that, when the pilot obturator (9) leaves the associated seat (8), the pressures of the fluid acting on the surface of the main obturator (7) are substantially balanced.

# FIG. 1

# FIG. 2

# FIG. 3

## FIG. 4

# FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2737842 (GECOS) <br> * page 11, line 16 - page 13, line 19; figures 1, and, 2 * | 1 | B60T15/04 <br> F16K39/02 |
| A | GB-A-753576 (DUNLOP) <br> * page 2, lines 125 - 3; figure 56 * | 1 | |
| A | FR-A-1305081 (HANSA-METALWERKE AG) | | |

TECHNICAL FIELDS
SEARCHED (Int. Cl.5 )

B60T
F16K

The present search report has been drawn up for all claims

| Place of search | Date of completion of the search | Examiner |
|---|---|---|
| THE HAGUE | 27 FEBRUARY 1990 | HARTEVELD C.D.H. |

EPO FORM 1503 03.82 (P0401)